# EUROPÄISCHE PATENTSCHRIFT

(11) **EP 0 885 933 B1**
(45) Veröffentlichungstag und Bekanntmachung des Hinweises auf die Patenterteilung: **30.08.2000**
(21) Anmeldenummer: 98110604.0
(22) Anmeldetag: 10.06.1998
(51) Int. Cl.: C08L 83/08

(54) **Alkoxyvernetzende RTV1-Siliconkautschuk-Mischungen**
One-component alkoxy containing RTV-silicone rubber compositions
Compositions d'élastomères de silicone à un composant et à groupes alkoxy durcissables à température ambiante

(30) Priorität: 17.06.1997 DE 19725517
(43) Veröffentlichungstag der Anmeldung: 23.12.1998
(73) Patentinhaber: Wacker-Chemie GmbH, 81737 München (DE)
(72) Erfinder: Scheim, Uwe, Dr. rer. nat., 01640 Coswig (DE)

(56) Entgegenhaltungen:
- EP-A- 0 304 701
- US-A- 4 460 739
- US-A- 5 244 938

## Beschreibung

Die Erfindung betrifft alkoxyvernetzende RTV1-Siliconkautschuk-Mischungen auf der Basis von Polydiorganosiloxanen mit Dialkoxyorganosiloxy-Endgruppen, wobei der Organorest ein substituierter Amidoalkylrest ist.

Unter Ausschluß von Wasser lagerfähige, bei Zutritt von Wasser bei Raumtemperatur zu Elastomeren vulkanisierende Einkomponenten-Siliconkautschukmischungen (RTV1) sind bekannt. Sie enthalten im allgemeinen ein polymeres, meist lineares Siloxan, eine vernetzend wirkende Verbindung, die leicht hydrolysierbare Gruppen enthalten muß, einen Weichmacher, der meist ein methylterminiertes Polydimethylsiloxan ist, und ggf. weitere Zusätze wie Härtungsbeschleuniger, Pigmente, Verarbeitungshilfsmittel und Füllstoffe. Die Vulkanisation der Mischungen kann sauer, z. B. bei Anwesenheit von Acetoxysilanen, basisch, z. B. mittels Aminosilanen, oder neutral, z. B. durch Verbindungen, die Oximo- oder Alkoxygruppen aufweisen, erfolgen. Neutral vernetzende RTV1-Systeme werden vor allem dann benötigt, wenn die bei der Aushärtung der Mischungen entstehenden Spaltprodukte den Untergrund nicht beeinflussen sollen, beispielsweise beim Verfügen von Beton oder metallischen Werkstoffen.

Normalerweise wird für die Formulierung von RTV1-Massen ein Polymer mit OH-Gruppen eingesetzt. Diese Verfahrensweise wird zum Beispiel bei acetat-, oxim- und aminvernetzenden Mischungen angewendet. Es ist auch möglich, bei der Herstellung von alkoxyvernetzenden RTV1-Massen die leicht zugänglichen hydroxyterminierten Polydiorganosiloxane einzusetzen. So sind zum Beispiel in EP 384 609 und EP 543 615 mit sehr viel Füllstoff versetzte, methoxyvernetzende Massen beschrieben, die unter Verwendung von OH-terminierten Polydimethylsiloxanen hergestellt wurden. Diese Methode funktioniert aber nur dann, wenn man zunächst das Polymer, den Weichmacher und die Füllstoffe (in diesem Falle eine Kombination aus gefällter und gemahlener Kreide) miteinander mischt und dann anschließend Methyltrimethoxysilan als Vernetzer und den Vernetzungskatalysator zusetzt. Dabei entsteht zunächst ein extrem hochviskoses bis zum Teil sogar gummielastisches Material, das nur unter Verwendung spezieller Mischtechnologien verarbeitet werden kann. Die normalerweise für RTV1-Massen verwendete Mischtechnologie ist nicht verwendbar. Außerdem beschränkt sich diese Verfahrensweise auf hochgefüllte Massen. Für transparente, nur mit hochdisperser Kieselsäure gefüllte Systeme ist sie nicht anwendbar. Es ist bekannt, daß beim Mischen von OH-Endgruppenpolymer mit Kieselsäure ohne Vernetzer eine sehr hochviskose Paste entsteht, die schnell zu einer harten krümeligen Masse verstrammt. Bei der Zugabe von Vernetzer zu einer solchen Mischung geht die Standfestigkeit der Pasten verloren. Hauptsächlich werden aber gerade solche standfesten Massen benötigt. Darüber hinaus ist die vorzeitige Vernetzung von Massen, die nach dem eben beschriebenen Stand der Technik hergestellt werden, nicht zu beherrschen.

Deswegen werden für alkoxyvernetzende RTV1-Systeme Polymere mit Alkoxyendgruppen eingesetzt. Ihre Herstellung ist bekannt und erfolgt im allgemeinen durch Umsetzung eines hydroxyterminierten Polydiorganosiloxanes einer bestimmten Viskosität mit Alkoxysilanen in Gegenwart von Katalysatoren (u. a. EP 137 883, EP 304 701, EP 559 045). Während der dabei stattfindenden Kondensation (Abspaltung von Alkohol) wird das gewünschte Polymer gebildet. An die Herstellung des Alkoxyendgruppenpolymers schließt sich dann die Mischungsherstellung an, die jetzt wie oben beschrieben erfolgen kann. Nachteilig ist jedoch bei allen bisher beschriebenen Verfahren, daß nur bei Verwendung von Methoxysilanen ein ausreichender Umsetzungsgrad der OH-Endgruppenpolymere erreicht wird. Verwendet man die bisher bekannten Ethoxysilane zur Herstellung zur Herstellung der Polymere wird keine vollständige Umsetzung der OH-Gruppen erreicht. Deshalb kann es bereits beim Herstellen der RTV1-Mischungen oder bei der Lagerung der fertigen Mischungen zur Aushärtung der Massen kommen, d. h. die erhaltenen Produkte sind nicht ausreichend lagerstabil.

Weiterhin ist es wegen der Toxizität des Methanols wünschenswert, alkoxyvernetzende RTV1-Massen herstellen zu können, bei denen nur unbedenkliche Spaltprodukte, wie z. B. Ethanol, entstehen.

Die Aufgabe der Erfindung bestand daher darin, alkoxyvernetzende RTV1-Siliconkautschuk-Mischungen bereitzustellen, welche, von Polymeren mit Alkoxy-Endgruppen ausgehend, unter Verwendung der auch für andere RTVI-Massen benutzten Mischtechnologien herstellbar sein sollen. Insbesondere sollen damit transparente, standfeste, alkoxyvernetzende RTV1-Pasten hergestellt werden können.

Gegenstand der Erfindung sind alkoxyvernetzende RTV1-Siliconkautschuk-Mischungen, welche enthalten
(a) mindestens ein Polydiorganosiloxan mit Dialkoxyorganosiloxy-Endgruppen der allgemeinen Formel (I) 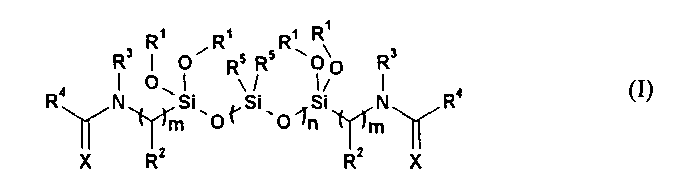 worin R¹ unabhängig voneinander unsubstituierte und/oder substituierte Alkyl- und/oder Silylreste, R² unabhängig voneinander unsubstituierte und/oder substituierte, gesättigte und/oder ungesättigte Alkyl- und/oder Arylreste und/oder Wasserstoff, R³ unsubstituierte oder substituierte, gesättigte oder ungesättigte Alkyl-, Aryl- oder Acylreste oder Wasserstoff, R⁴ unsubstituierte oder substituierte, gesättigte oder ungesättigte Alkyl- oder Arylreste oder Wasserstoff, R⁵ unabhängig voneinander unsubstituierte und/oder substituierte Alkyl-, Alkenyl- und/oder Arylreste sowie X Sauerstoff oder Schwefel bedeuten, wobei die Reste R³ und R⁴ alicyclische oder heterocyclische Ringe bilden können, n Werte von 20 bis 2000 annimmt und m entweder 1 oder 2 ist,
(b) mindestens ein Alkoxysilan und/oder dessen partielles Hydrolysat der allgemeinen Formel (II) 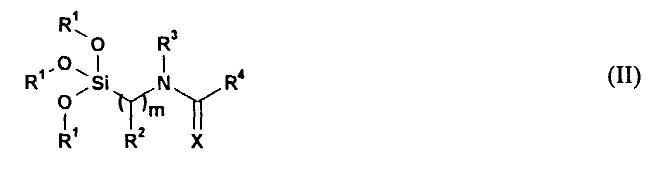 worin R¹ bis R⁴ sowie X und m die oben angegebene Bedeutung aufweisen, sowie
(c) mindestens ein Organosilan und/oder dessen partielles Hydrolysat der allgemeinen Formel (III)

   R⁵ ₓSi(OR¹)₄₋ₓ (III)

   wobei R¹ und R⁵ die oben angegebene Bedeutung aufweisen und x entweder 0 oder 1 ist.

Als Dialkoxyorganosiloxy-Gruppen in der allgemeinen Formel (I) sind 1-(Pyrrolidin-2-on-1-yl)alkyldialkoxysiloxy- und/oder 2-(Pyrrolidin-2-on-1-yl)alkyldialkoxysiloxyreste sowie 1-(N-Methylacetamido)alkyldialkoxysiloxy- und/oder 2-(N-Methylacetamido)alkyldialkoxysiloxyreste bevorzugt.

Das Polydiorganosiloxan der allgemeinen Formel (I) kann erhalten werden durch Umsetzung von hydroxyterminierten Polydiorganosiloxanen der allgemeinen Formel (IV)

HO(SiR⁵ ₂O)ₙH (IV)

wobei R⁵ und n die oben angegebene Bedeutung aufweisen,
mit Alkoxysilanen und/oder deren partiellen Hydrolysaten der allgemeinen Formel (II), ggf. in Gegenwart von Katalysatoren, wie NaOH oder KOH, Lithiumverbindungen, Alkalialkoholaten oder Lewissäuren, und bei erhöhter Temperatur.

Die eingesetzten Polydiorganosiloxane der allgemeinen Formel (IV) sind bekannt. Üblicherweise werden sie entweder durch Polymerisation von cyclischen Siloxanen in Gegenwart stark basischer Katalysatoren und geringer Mengen Wasser oder durch Polykondensation von kurzkettigen linearen Oligomeren mit OH-Endgruppen hergestellt. Bevorzugte Substituenten R⁵ sind Methyl-, Ethyl-, Phenyl-, Vinyl- und Trifluorpropylreste. Besonders bevorzugt sind wegen der leichten Verfügbarkeit α,ω-Dihydroxypolydimethylsiloxane, bei denen n Werte von 100 bis 1600 annimmt. Obwohl die Verwendung rein linearer Polymere bevorzugt ist, können auch solche Polymere verwendet werden, die Verzweigungsstellen enthalten.

Bei der Herstellung des Polyorganosiloxanes der allgemeinen Formel (I) richtet sich die zu verwendende Menge des Alkoxysilanes der allgemeinen Formel (II) nach dem Gehalt an siliciumgebundenen Hydroxylgruppen des Polydiorganosiloxanes der allgemeinen Formel (IV) und ist vom Fachmann auf die jeweiligen Verhältnisse leicht anzupassen. Vorzugsweise wird das Alkoxysilan in Mengen zwischen 0,1 und 10 Gew.-%, bevorzugt 1 bis 5 Gew.-%, bezogen auf das als Reaktionspartner verwendete Polydiorganosiloxan eingesetzt, wobei ein Überschuss an Alkoxysilan im Produkt verbleiben oder abgetrennt werden kann.

Das Alkoxysilan der allgemeinen Formel (II) ist vorzugsweise in Mengen zwischen 0,1 und 10 Gew.-%, besonders bevorzugt 1 bis 5 Gew.-% bezogen auf die Gesamtmischung, enthalten.

Als Alkoxysilane der allgemeinen Formel (II) können beispielsweise Verbindungen eingesetzt werden, bei welchen als Rest R¹ keine Silylgruppe gebunden sind, bzw. deren partielle Hydrolysate. Beispiele dafür sind N-1-(Triethoxysilyl)ethylpyrrolidon-(2), N-2-(Triethoxysilyl)ethylpyrrolidon-(2), N-1-(Triethoxysilyl)ethyl-N-methylacetamid, N-2-(Triethoxysilyl)ethyl-N-methylacetamid oder deren Gemische

Weiterhin können als Alkoxysilane der allgemeinen Formel (II) die Umsetzungsprodukte von Alkoxysilanen der allgemeinen Formel (II), die keine Silylgruppe enthalten, bzw. von deren partiellen Hydrolysaten mit Organosilanen bzw. deren partiellen Hydrolysaten der allgemeinen Formel (III) eingesetzt werden, beispielsweise N-1-[(Methyldiethoxysiloxy)diethoxysilyl]ethylpyrrolidon-(2). Beispiele für verwendete partielle Hydrolysate von Alkoxysilanen der allgemeinen Formel (II) sind 1,3-Bis(1'-N-Methylacetamidoethyl)-1,1,3,3,-tetraethoxydisiloxan -tetraethoxydisiloxan oder 1-N-[(Diethoxymethylsiloxy)diethoxysilyl]ethylpyrrolidon-(2)

Weitere Beispiele für Alkoxysilane der allgemeinen Formel (II) sind:

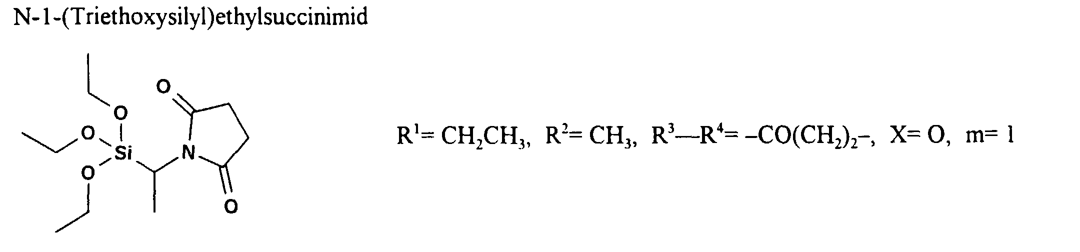

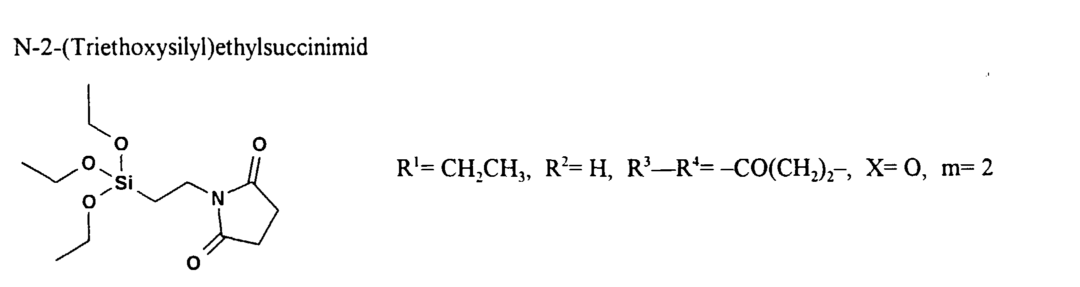

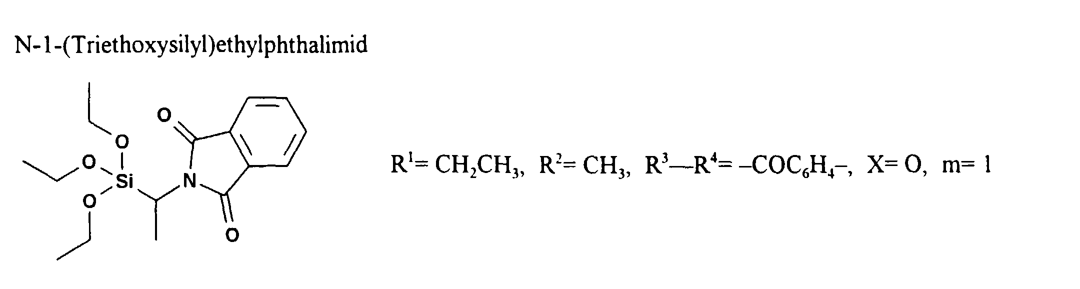

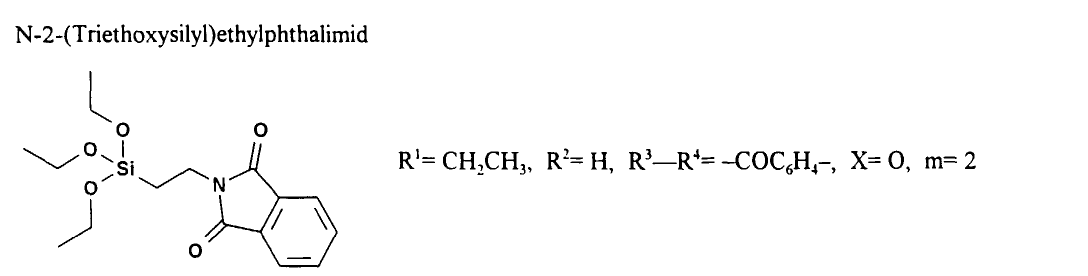

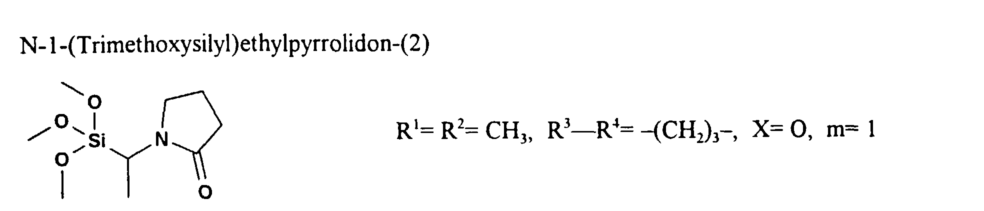

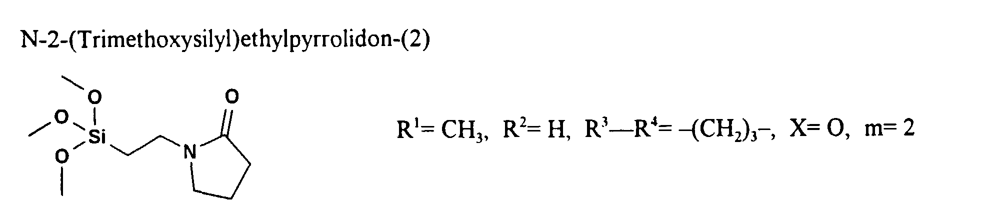

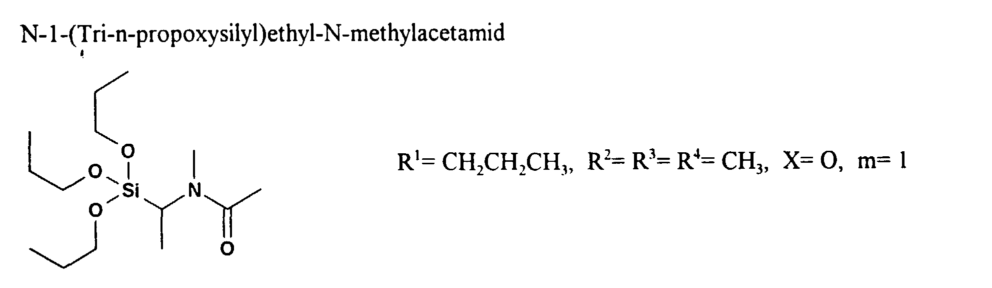

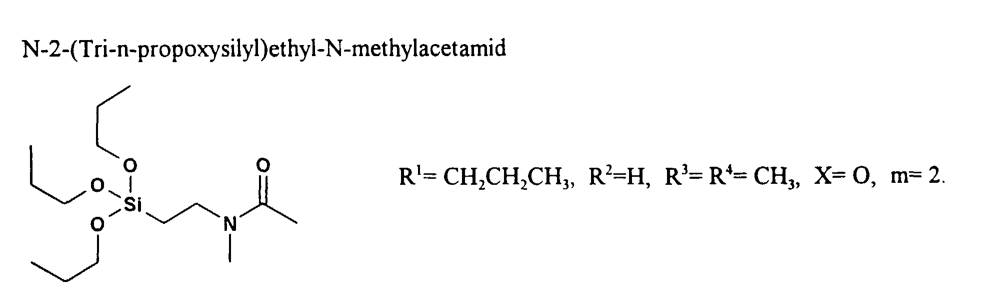

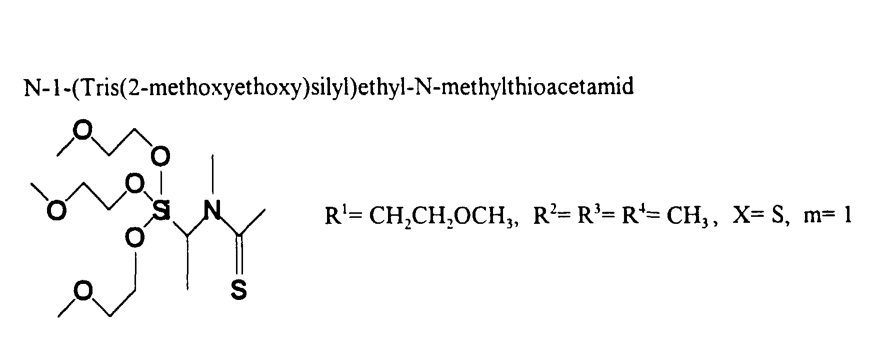

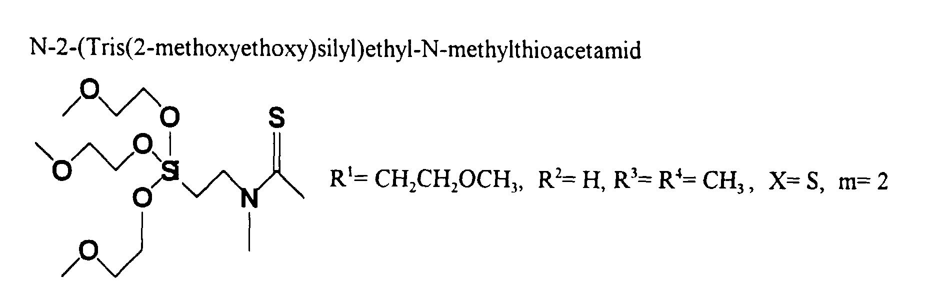

Diese Verbindungen können auch als Gemische eingesetzt werden.

Die erfindungsgemäß eingesetzten Alkoxysilane der allgemeinen Formel (II) werden beispielsweise erhalten durch Addition des entsprechenden Trialkoxysilans an das entsprechende N-vinylsubstituierte Amid.

Das Organosilan und/oder dessen partielles Hydrolysat der allgemeinen Formel (III) ist in der RTV1-Siliconkautschuk-Mischung üblicherweise als Vernetzer bis zu 10 Gew-% enthalten. Beispiele dafür sind Methyltriethoxysilan, Vinyltriethoxysilan, Tetraethoxysilan, Phenyltriethoxysilan, Tetrakis(2-methoxyethoxy)-silan, Tetrakis(2-butoxyethoxy)silan, N-1-(Triethoxysilyl)ethylpyrrolidon-(2), und N-1-(Triethoxysilyl)ethyl-N-methylacetamid bzw. die bei den Synthesen der letzten beiden Produkte entstehenden Gemische der N-1-(Triethoxysilyl)ethyl- und N-2-(Triethoxysilyl)ethylamide. Es können auch beliebige Gemische der erwähnten Verbindungen eingesetzt werden.

Übliche weitere Bestandteile der RTV1-Mischungen sind:
(d) bis zu 40 Gew.-% Weichmacher, bevorzugt trimethylsilylterminierte Polydimethylsiloxane mit Viskositäten zwischen 0,05 und 10 Pas. Besonders bevorzugt sind Viskositäten zwischen 0,1 und 1 Pas. Es können jedoch auch methylterminierte Polydimethylsiloxane eingesetzt werden, bei denen einige der Methylgruppen durch andere organische Gruppen wie zum Beispiel Phenyl, Vinyl oder Trifluorpropyl ersetzt sind. Obwohl besonders bevorzugt lineare trimethylsilylterminierte Polydimethylsiloxane als Weichmacher eingesetzt werden, könne auch solche Verbindungen verwendet werden, die einige Verzweigungsstellen enthalten, die dadurch entstehen, daß in den zur Herstellung der Weichmacher dienenden Ausgangsprodukten kleine Mengen tri- oder tetrafunktioneller Silane enthalten sind. Es ist aber auch möglich anstatt der Siloxane, bis zu 25 Gew.-%, bezogen auf die Gesamtmischung, andere organische Verbindungen, wie z. B. bestimmte aromatenfreie Kohlenwasserstoffgemische, als Weichmacher einzusetzen.
(e) 0,01 bis 5 Gew-% eines Katalysators um eine genügend hohe Vernetzungsgeschwindigkeit zu erreichen. Üblich sind Dialkylzinnverbindungen, wie z. B. Dibutylzinndilaurat oder -diacetat, bzw. Titanverbindungen, wie Tetrabutyl- oder Tetraisopropyltitanat oder Titanchelate. Es können auch Katalysatorgemische eingesetzt werden.
(f) bis zu 30 Gew-% verstärkende Füllstoffe und/oder bis zu 60 Gew-% nichtverstärkende Füllstoffe zur Erzielung bestimmter mechanischer Eigenschaften. Bevorzugte Füllstoffe mit hoher spezifischer Oberfläche sind pyrogene Kieselsäure oder gefälltes Calciumcarbonat. Darüber hinaus können Füllstoffe mit geringer spezifischer Oberfläche als Extender verwendet werden. Bevorzugt ist hierbei gemahlenes Calciumcarbonat.
(g) bis zu 2 Gew.-% Haftvermittler, vorzugsweise mit funktionellen Gruppen substituierte Alkoxysilane. Besonders bevorzugt sind 3-Aminopropyltriethoxysilan, 3-(2-Aminoethyl)-aminopropyltriethoxysilan und 3-Mercaptopropyltriethoxysilan. Es ist auch möglich, ein Gemisch von mit funktionellen Gruppen substituierter Alkoxysilane einzusetzen.
(h) weitere Zusätze, in Abhängigkeit vom Verwendungszweck der RTV1-Systeme können beispielsweise sein: Farbpigmente, Fungizide (jeweils bis zu 2 Gew.-%).

Die Mischungsherstellung kann kontinuierlich oder diskontinuierlich nach bekannten Verfahren erfolgen. Überraschenderweise wurde gefunden, daß sich aus den alkoxyterminierten Polydiorganosiloxanen (a), den Alkoxysilane (b) und den anderen Bestandteilen (c) bis (h) RTV1-Systeme mischen lassen, ohne dass während der Mischungsherstellung eine vorzeitige Vernetzung eintritt und damit die RTV1-Mischungen unbrauchbar werden. Sowohl transparente, standfeste, als auch hochgefüllte Produkte sind problemlos herstellbar. Die erfindungsgemäßen RTV1-Siliconkautschuk-Mischungen härten mit hoher Geschwindigkeit und klebfrei zu Produkten mit guten mechanischen Eigenschaften aus. Die Lagerstabilität der Mischungen ist ausgezeichnet. Der besondere Vorteil ist, daß man auch Systeme realisieren kann, bei deren Vernetzung nur Spaltprodukte entstehen, die völlig frei vom toxischen Methanol sind.

### Ausführungsbeispiele

### Beispiel 1

450g eines α,ω-Bis-[1'-(Pyrrolidin-2-on-1-yl)ethyldiethoxysiloxy]polydimethylsiloxans mit einer Viskosität von 63.000 mPas, 350 g eines methylendständigen Polydimethylsiloxans mit einer Viskosität von 100 mPas, 23 g N-1-(Triethoxysilyl)ethylpyrrolidon-(2), 24 g Methyltriethoxysilan, 36 g Bis(ethylacetoacetato)diisobutyltitanat und 160 g einer mit Hexamethyldisilazan hydrophobierten pyrogenen Kieselsäure mit einer Oberfläche von ca. 200 m²/g wurden in einem Dissolvermischer zu einer standfesten Paste verarbeitet, die unter Einwirkung von Luftfeuchtigkeit zu einem Silicongummi vernetzt. Die Kennwerte dieses Produkts sind in Tabelle 1 zusammengestellt.

### Beispiel 2

560g eines α,ω-Bis-[1'-(Pyrrolidin-2-on-1-yl)ethyldiethoxysiloxy]polydimethylsiloxans mit einer Viskosität von 63.000 mPas, 240 g eines methylendständigen Polydimethylsiloxans mit einer Viskosität von 100 mPas, 23 g N-1-(Triethoxysilyl)ethylpyrrolidon-(2), 24 g Methyltriethoxysilan, 36 g Bis(ethylacetoacetato)diisobutyltitanat und 100 g einer mit Hexamethyldisilazan hydrophobierten pyrogenen Kieselsäure mit einer Oberfläche von ca. 200 m²/g wurden in einem Dissolvermischer zu einer standfesten Paste verarbeitet, die unter Einwirkung von Luftfeuchtigkeit zu einem Silicongummi vernetzt. Die Kennwerte dieses Produkts sind in Tabelle 1 zusammengestellt.

### Beispiel 3

450g eines α,ω-Bis-[1-(N-Methylacetamido)ethyldiethoxysiloxy]polydimethylsiloxans mit einer Viskosität von 67.000 mPas, 350 g eines methylendständigen Polydimethylsiloxans mit einer Viskosität von 100 mPas, 23 g N-1-(Triethoxysilyl)ethyl-N-methylacetamid, 24 g Methyltriethoxysilan, 36 g Bis(ethylacetoacetato)diisobutyltitanat und 160 g einer mit Hexamethyldisilazan hydrophobierten pyrogenen Kieselsäure mit einer Oberfläche von ca. 200 m²/g wurden in einem Dissolvermischer zu einer standfesten Paste verarbeitet, die unter Einwirkung von Luftfeuchtigkeit zu einem Silicongummi vernetzt. Die Kennwerte dieses Produkts sind in Tabelle 1 zusammengestellt.

### Beispiel 4

450g eines α,ω-Bis-[1-(N-Methylacetamido)ethyldiethoxysiloxy]polydimethylsiloxans mit einer Viskosität von 67.000 mPas, 350 g eines methylendständigen Polydimethylsiloxans mit einer Viskosität von 100 mPas, 23 g N-1-(Triethoxysilyl)ethyl-N-methylacetamid, 40 g Methyltriethoxysilan, 30 g Tetraisopropyltitanat und 100 g einer mit Hexamethyldisilazan hydrophobierten pyrogenen Kieselsäure mit einer Oberfläche von ca. 200 m²/g wurden in einem Dissolvermischer zu einer standfesten Paste verarbeitet, die unter Einwirkung von Luftfeuchtigkeit zu einem Silicongummi vernetzt. Die Kennwerte dieses Produkts sind in Tabelle 1 zusammengestellt.

### Beispiel 5

420g eines α,ω-Bis-[1'-(Pyrrolidin-2-on-1-yl)ethyldiethoxysiloxy]polydimethylsiloxans mit einer Viskosität von 63.000 mPas, 180 g eines methylendständigen Polydimethylsiloxans mit einer Viskosität von 100 mPas, 23 g N-1-(Triethoxysilyl)ethylpyrrolidon-(2), 27 g Methyltriethoxysilan, 30 g Bis(ethylacetoacetato)diisobutyltitanat, 60 g einer pyrogenen Kieselsäure mit einer Oberfläche von ca. 150 m²/g und 720 g eines mit Sterinsäure beschichteten, gemahlenen Calciumcarbonats wurden in einem Dissolvermischer zu einer standfesten Paste verarbeitet, die unter Einwirkung von Luftfeuchtigkeit zu einem Silicongummi vernetzt. Die Kennwerte dieses Produkts sind in Tabelle 1 zusammengestellt.

### Beispiel 6

Ein Gemisch aus 20,4 g Methyltriethoxysilan und 25,8 g N-1-(Triethoxysilyl)ethyl-N-methylacetamid wurde mit 1,9g Wasser in 20 ml Ethanol versetzt. Nach 24 Stunden wurde das gebildete Produkt zusammen mit dem als Lösungsmittel zugesetzten Ethanol abdestilliert. Es verblieben 35,5g eines oligomeren Hydrolysates, das aus 34 Gew.-% Methyltriethoxysilan, 8 Gew.-% N-1-(Triethoxysilyl)ethyl-N-methylacetamid, 27 Gew-% N-1-[(Diethoxymethylsiloxy)diethoxysilyl]ethyl-N-methylacetamid, 8 Gew.-% 1,3-Bis(1'-(N-methylacetamido)ethyl-1,1,3,3-tetraethoxydisiloxan und 23 Gew-% höheren oligomeren Hydrolyse/Kondensationsprodukten des N-1-(Triethoxysilyl)ethyl-N-methylacetamids bestand. Die Zusammensetzung wurde mittels ²⁹Si-NMR-Spektroskopie ermittelt. 450g eines α,ω-Bis-[1-(N-Methylacetamido)ethyldiethoxysiloxy]polydimethylsiloxans mit einer Viskosität von 67 000 mPas, 350 g eines methylendständigen Polydimethylsiloxans mit einer Viskosität von 100 mPas, 35g des oben beschriebene Oligomerengemisches, 37 g Bis(ethylacetoacetato)diisobutyltitanat und 164 g einer mit Hexamethyldisilazan hydrophobierten pyrogenen Kieselsäure mit einer Oberfläche von ca. 200 m²/g wurden in einem Dissolvermischer zu einer standfesten Paste verarbeitet, die unter Einwirkung von Luftfeuchtigkeit zu einem Silicongummi vernetzt.

### Vergleichsbeispiel 7

Um die Kennwerte der in den vorangegangenen Beispielen erhaltenen Massen vergleichen zu können, wurde eine Mischung hergestellt, die die bisher bekannten Rohstoffe enthält, aber methoxyvernetzend ist, d.h. es entsteht bei der Aushärtung eine erhebliche Menge Methanol.
1150 g eines methoxyterminierten Polymers, das durch Umsetzung eines α,ω-Dihydroxypolydimethylsiloxans mit einer Viskosität von 50.000 mPas und Methyltrimethoxysilan in Gegenwart von Zinkacetylacetonat bei 80°C hergestellt wurde, 850 g eines methylendständigen Polydimethylsiloxans mit einer Viskosität von 100 mPas, 400 g einer mit Hexamethyldisilazan hydrophobierten pyrogenen Kieselsäure mit einer Oberfläche von ca. 200 m²/g, 80 g Methyltrimethoxysilan und 30 g Bis(ethylacetoacetato)diisobutyltitanat wurden mit einem Dissolvermischer zu einer standfesten Paste verarbeitet, die unter Einwirkung von Luftfeuchtigkeit zu einem Silicongummi vernetzt. Die Kennwerte dieses Produkts sind in Tabelle 1 zusammengestellt.

**Tabelle 1**

| **Kennwert** | **Methode** | Bsp. 1 | Bsp. 2 | Bsp. 3 | Bsp. 4 | Bsp. 5 | V.-Bsp. 7 |
|---|---|---|---|---|---|---|---|
| Hautbildungszeit [min] | | 30 | 60 | 25 | 25 | 60 | 20 |
| Zugfestigkeit [MPa] | DIN 53504 S2 | 1,26 | 1,04 | 0,96 | 0,80 | 0,95 | 1,45 |
| Reißdehnung [%] | DIN 53504 S2 | 650 | 499 | 522 | 400 | 450 | 630 |
| Spannung bei 100% Dehnung [MPa] | DIN 53504 S2 | 0,41 | 0,36 | 0,34 | 0,25 | 0,47 | 0,32 |
| Härte [Shore-A] | DIN 53505 | 23 | 20 | 20 | 12 | 30 | 17 |

Die Hautbildungszeit wurde sofort nach Herstellung des Produktes gemessen. Die mechanischen Kennwerte (Zugfestigkeit, Reißdehnung, Spannung bei 100 % Dehnung und Härte) wurden nach 7-tägiger Aushärtung bei 23 °C und 50 % relativer Luftfeuchtigkeit ermittelt.

## Patentansprüche

1. Alkoxyvernetzende RTVI-Siliconkautschuk-Mischungen, enthaltend
(a) mindestens ein Polydiorganosiloxan mit Dialkoxyorganosiloxy-Endgruppen der allgemeinen Formel (I) 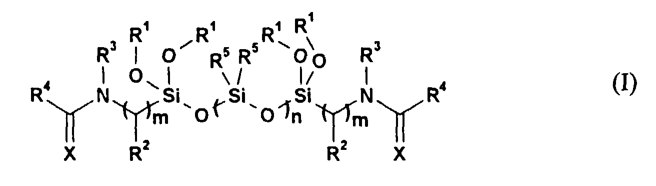 worin R¹ unabhängig voneinander unsubstituierte und/oder substituierte Alkyl- und/oder Silylreste, R² unabhängig voneinander unsubstituierte und/oder substituierte, gesättigte und/oder ungesättigte Alkyl- und/oder Arylreste und/oder Wasserstoff, R³ unsubstituierte oder substituierte, gesättigte oder ungesättigte Alkyl-, Aryl- oder Acylreste oder Wasserstoff, R⁴ unsubstituierte oder substituierte, gesättigte oder ungesättigte Alkyl- oder Arylreste oder Wasserstoff, R⁵ unabhängig voneinander unsubstituierte und/oder substituierte Alkyl-, Alkenyl- und/oder Arylreste sowie X Sauerstoff oder Schwefel bedeuten, wobei die Reste R³ und R⁴ alicyclische oder heterocyclische Ringe bilden können, n Werte von 20 bis 2000 annimmt und m entweder 1 oder 2 ist,
(b) mindestens ein Alkoxysilan und/oder dessen partielles Hydrolysat der allgemeinen Formel (II) 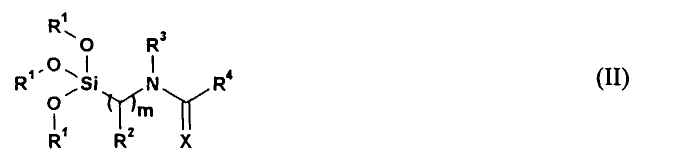 worin R¹ bis R⁴ sowie X und m die oben angegebene Bedeutung aufweisen, sowie
(c) mindestens ein Organosilan und/oder dessen partielles Hydrolysat der allgemeinen Formel (III)
R⁵ ₓSi(OR¹)₄₋ₓ (III)
wobei R¹ und R⁵ die oben angegebene Bedeutung aufweisen und x entweder 0 oder 1 ist.

2. Alkoxyvernetzende RTV-1-Siliconkautschukmischungen nach Anspruch 1, dadurch gekennzeichnet, dass das Polydiorganosiloxan der allgemeinen Formel (I) erhalten wird durch Umsetzung von hydroxyterminierten Polydiorganosiloxanen der allgemeinen Formel (IV)
HO(SiR⁵ ₂O)ₙH (IV)
wobei R⁵ und n die oben angegebene Bedeutung aufweisen,
mit Alkoxysilanen und/oder deren partiellen Hydrolysaten der allgemeinen Formel (II).

3. Alkoxyvernetzende RTV1-Siliconkautschuk-Mischungen nach Anspruch 1, dadurch gekennzeichnet, dass als Alkoxysilane der allgemeinen Formel (II) Verbindungen eingesetzt werden, bei welchen als Rest R¹ keine Silylgruppe gebunden sind bzw. deren partielle Hydrolysate.

4. Alkoxyvernetzende RTV1-Siliconkautschuk-Mischungen nach Anspruch 3, dadurch gekennzeichnet, daß als Alkoxysilan der allgemeinen Formel (II) N-1-(Triethoxysilyl)ethylpyrrolidon-(2) oder N-2-(Triethoxysilyl)ethylpyrrolidon-(2) oder deren Gemische eingesetzt werden.

5. Alkoxyvernetzende RTVI-Siliconkautschuk-Mischungen nach Anspruch 3, dadurch gekennzeichnet, daß als Alkoxysilan der allgemeinen Formel (II) N-1-(Triethoxysilyl)ethyl-N-methylacetamid oder N-2-(Triethoxysilyl)ethyl-N-methylacetamid oder deren Gemische eingesetzt werden.

6. Alkoxyvernetzende RTV-1-Siliconkautschuk-Mischungen nach Anspruch 1, dadurch gekennzeichnet, dass als Alkoxysilane der allgemeinen Formel (II) Umsetzungsprodukte von Alkoxysilanen der allgemeinen Formel (II), die keine Silylgruppe enthalten, bzw. von deren partiellen Hydrolysaten mit Organosilanen bzw. deren partiellen Hydrolysaten der allgemeinen Formel (III) eingesetzt werden.

7. Alkoxyvernetzende RTV1-Siliconkautschuk-Mischungen nach Anspruch 6, dadurch gekennzeichnet, dass als Alkoxysilan der allgemeinen Formel (II) N-1-[(Methyldiethoxysiloxy)diethoxysilyl]ethylpyrrolidon-(2) eingesetzt wird.

8. Alkoxyvernetzende RTV1-Siliconkautschuk-Mischungen nach Anspruch 1, dadurch gekennzeichnet, dass als Organosilane der allgemeinen Formel (III) Organotriethoxysilane und/oder Tetraethoxysilan eingesetzt werden.

## Claims

1. Alkoxy-crosslinking RTV1 silicone rubber mixtures comprising
(a) at least one polydiorganosiloxane with dialkoxyorganosiloxy end groups, of the general formula (I) 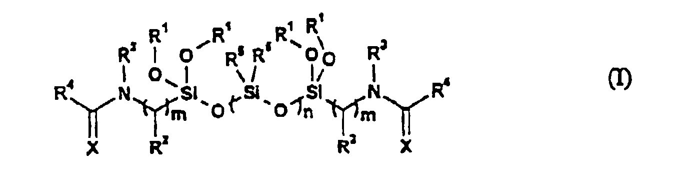 where R¹, independently of one another, are unsubstituted and/or substituted alkyl and/or silyl radicals, R², independently of one another, are unsubstituted and/or substituted, saturated and/or unsaturated alkyl and/or aryl radicals and/or hydrogen, R³ are unsubstituted or substituted, saturated or unsaturated alkyl, aryl or acyl radicals or hydrogen, R⁴ are unsubstituted or substituted, saturated or unsaturated alkyl or aryl radicals or hydrogen, R⁵, independently of one another, are unsubstituted and/or substituted alkyl, alkenyl and/or aryl radicals, and also X is oxygen or sulphur, where the radicals R³ and R⁴ may form alicyclic or heterocyclic rings, n is from 20 to 2000 and m is either 1 or 2,
(b) at least one alkoxysilane and/or its partial hydrolysates of the general formula (II) 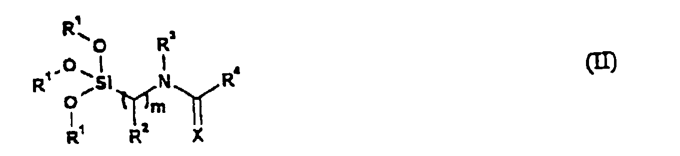 where R¹ to R⁴, and also X and m, are as defined above, and also
(c) at least one organosilane and/or its partial hydrolysate of the general formula (III)
R⁵ ₓSi(OR¹)₄₋ₓ (III)
where R¹ and R⁵ are as defined above, and x is either 0 or 1.

2. Alkoxy-crosslinking RTV1 silicone rubber mixtures according to Claim 1, characterized in that the polydiorganosiloxane of the general formula (I) is obtained by reacting hydroxyl-terminated polydiorganosiloxanes of the general formula (IV)
HO(SiR⁵ ₂O)ₙH (IV)
where R⁵ and n are as defined above,
with alkoxysilanes and/or their partial hydrolysates of the general formula (II).

3. Alkoxy-crosslinking RTV1 silicone rubber mixtures according to Claim 1, characterized in that the alkoxysilanes of the general formula (II) are compounds which have no silyl group bonded as radical R¹ or their partial hydrolysates.

4. Alkoxy-crosslinking RTV1 silicone rubber mixtures according to Claim 3, characterized in that the alkoxysilane used of the general formula (II) is N-1-(triethoxysilyl)ethyl-2-pyrrolidone or N-2-(triethoxysilyl)ethyl-2-pyrrolidone or mixtures of these.

5. Alkoxy-crosslinking RTV1 silicone rubber mixtures according to Claim 3, characterized in that the alkoxysilane used of the general formula (II) is N-1-(triethoxysilyl)ethyl-N-methylacetamide or N-2-(triethoxysilyl)ethyl-N-methylacetamide or mixtures of these.

6. Alkoxy-crosslinking RTV1 silicone rubber mixtures according to Claim 1, characterized in that the alkoxysilanes used of the general formula (II) are reaction products of alkoxysilanes of the general formula (II) which contain no silyl group, and/or of their partial hydrolysates, with organosilanes and/or partial hydrolysates of these of the general formula (III) .

7. Alkoxy-crosslinking RTV1 silicone rubber mixtures according to Claim 6, characterized in that the alkoxysilane used of the general formula (II) is N-1-[(methyldiethoxysiloxy)diethoxysilyl]ethyl-2-pyrrolidone.

8. Alkoxy-crosslinking RTV1 silicone rubber mixtures according to Claim 1, characterized in that the organosilanes used of the general formula (III) are organotriethoxysilanes and/or tetraethoxysilane.

## Revendications

1. Mélanges de caoutchoucs de silicone RTV1 réticulant par alcoxy, contenant
(a) au moins un polydiorganosiloxane avec des groupements terminaux dialcoxyorganosiloxy de formule générale (I) 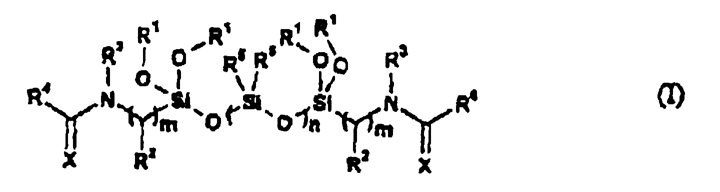 dans laquelle R¹ signifie, indépendamment l'un de l'autre, des radicaux alkyle et/ou silyle non substitués et/ou substitués, R² signifie, indépendamment l'un de l'autre, des radicaux alkyle et/ou aryle non substitués et/ou substitués, saturés et/ou insaturés et/ou un hydrogène, R³ signifie des radicaux alkyle, aryle ou acyle non substitués ou substitués, saturés ou insaturés ou un hydrogène, R⁴ signifie des radicaux alkyle ou aryle non substitués ou substitués, saturés ou insaturés ou un hydrogène, R⁵ signifie, indépendamment l'un de l'autre, des radicaux alkyle, alcényle et/ou aryle non substitués et/ou substitués, et X signifie un oxygène ou un soufre, les radicaux R³ et R⁴ pouvant former des noyaux alicycliques ou hétérocycliques, n prenant des valeurs de 20 à 2000 et m étant soit 1, soit 2,
(b) au moins un alcoxysilane et/ou son hydrolysat partiel de formule générale (II) 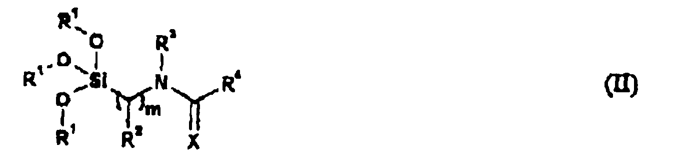 dans laquelle R¹ à R⁴, ainsi que X et m présentent la signification donnée ci-dessus, ainsi que
(c) au moins un organosilane et/ou son hydrolysat partiel de formule générale (III)
R⁵ ₓSi(OR¹)₄₋ₓ (III)
dans laquelle R¹ et R⁵ présentent la signification donnée ci-dessus et x est soit 0, soit 1.

2. Mélanges de caoutchoucs de silicone RTV1 réticulant par alcoxy suivant la revendication 1, caractérisés en ce qu'on obtient le polydiorganosiloxane de formule générale (I) en faisant réagir des polydiorganosiloxanes à terminaison hydroxyle de formule générale (IV)
HO(SiR⁵ ₂O)ₙH (IV)
dans laquelle R⁵ et n présentent la signification donnée ci-dessus,
avec des alcoxysilanes et/ou leurs d'hydrolysats partiels de formule générale (II).

3. Mélanges de caoutchoucs de silicone RTV1 réticulant par alcoxy suivant la revendication 1, caractérisés en ce qu'on utilise comme alcoxysilanes de formule générale (II) des composés dans lesquels aucun groupement silyle n'est lié comme radical R¹ ou, selon le cas, leurs hydrolysats partiels.

4. Mélanges de caoutchoucs de silicone RTV1 réticulant par alcoxy suivant la revendication 3, caractérisés en ce qu'on utilise comme alcoxysilane de formule générale (II) de la N-1-(triéthoxysilyl)éthyl-(2)-pyrrolidone ou de la N-2-(triéthoxysilyl)éthyl-(2)-pyrrolidone ou leurs mélanges.

5. Mélanges de caoutchoucs de silicone RTV1 réticulant par alcoxy suivant la revendication 3, caractérisés en ce qu'on utilise comme alcoxysilane de formule générale (II) du N-1-(triéthoxysilyl)éthyl-N-méthylacétamide ou du N-2-(triéthoxysilyl)éthyl-N-méthylacétamide ou leurs mélanges.

6. Mélanges de caoutchoucs de silicone RTV1 réticulant par alcoxy suivant la revendication 1, caractérisés en ce qu'on utilise comme alcoxysilanes de formule générale (II) des produits de transformation d'alcoxysilanes de formule générale (II) qui ne contiennent pas de groupement silyle, ou, selon le cas, de leurs hydrolysats partiels avec des organosilanes ou, selon le cas, leurs hydrolysats partiels de formule générale (III).

7. Mélanges de caoutchoucs de silicone RTV1 réticulant par alcoxy suivant la revendication 6, caractérisés en ce qu'on utilise comme alcoxysilane de formule générale (II) de la N-1-[(méthyldiéthoxysiloxy)diéthoxysilyl]éthyl-(2)-pyrrolidone.

8. Mélanges de caoutchoucs de silicone RTV1 réticulant par alcoxy suivant la revendication 1, caractérisés en ce qu'on utilise comme organosilanes de formule générale (III) des organotriéthoxysilanes et/ou du tétraéthoxysilane.
